# EUROPEAN PATENT SPECIFICATION

(11) **EP 2 244 504 B1**
(45) Date of publication and mention of the grant of the patent: **17.10.2012**
(21) Application number: 09305340.3
(22) Date of filing: 21.04.2009
(51) Int. Cl.: H04W 36/14

(54) **Reduction of flow break in sr-vcc mobility**
Verringerung der Flussunterbrechung in SR-VCC-Mobilität
Réduction de la rupture de flux dans la mobilité sr-vcc

(43) Date of publication of application: 27.10.2010
(73) Proprietor: Alcatel Lucent, 75007 Paris (FR)
(72) Inventor: Drevon, Nicolas, 91620, NOZAY (FR); Thiebaut, Laurent, 91620, NOZAY (FR); Bennett, Andrew, SWINDON, Wiltshire WI SN5 7DJ (GB)
(74) Representative: El Manouni, Josiane

(56) References cited:
- "ETSI TS 123 216 V8.3.0 (2009-03), Digital cellular telecommunications system (Phase 2+); Universal Mobile Telecommunications System (UMTS); LTE; Single Radio Voice Call Continuity (SRVCC); Stage 2 (3GPP TS 23.216 version 8.3.0 Release 8)" March 2009 (2009-03), ETSI , SOPHIA ANTIPOLIS, FRANCE , XP002550883 * the whole document *
- ALCATEL-LUCENT ET AL: "Alternative E enhancements" 3GPP DRAFT; S2-081361_ALT E ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Athens; 20080208, 8 February 2008 (2008-02-08), XP050263745 [retrieved on 2008-02-08]
- MOTOROLA: "Optimizing Alternative D-1 for LTE/CS voice call continuity" INTERNET CITATION, [Online] 8 October 2007 (2007-10-08), pages 1-12, XP002523490 Retrieved from the Internet: URL:http://www.3gpp.org/ftp/tsg_sa/WG2_Arc h/TSGS2_60_Kobe/Docs/> [retrieved on 2009-04-09]
- HUAWEI: "LTE-CS voice call continuity using CS-PS handover, PCC and ICS" 3GPP DRAFT; S2-073105_S2-073032_REV1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Orlando; 20070726, 26 July 2007 (2007-07-26), XP050260546 [retrieved on 2007-07-26]

## Description

The present invention generally relates to mobile communication networks and systems.

Detailed descriptions of mobile communication networks and systems can be found in the litterature, in particular in Technical Specifications published by standardisation bodies such as for example 3GPP (3^{rd} Generation Partnership Project).

Single Radio Voice Call Continuity SRVCC is specified in particular in 3GPP TS 26.216 specification. SRVCC provides voice call continuity between IP Multimedia Subsystem IMS over Packet Switched PS access and Circuit Switched CS access for calls that are anchored in IMS when the User Equipment UE is capable of transmitting/receiving on only one of those access networks at a given time.

3GPP TS 23.216 specifies SRVCC between E-UTRAN access and 3GPP2's 1xCS, and between E-UTRAN access and 3GPP's UTRAN/GERAN accesses and between UTRAN (HSPA) access and 3GPP's UTRAN/GERAN accesses, for CS calls that are anchored in the IP Multimedia Subsystem IMS.

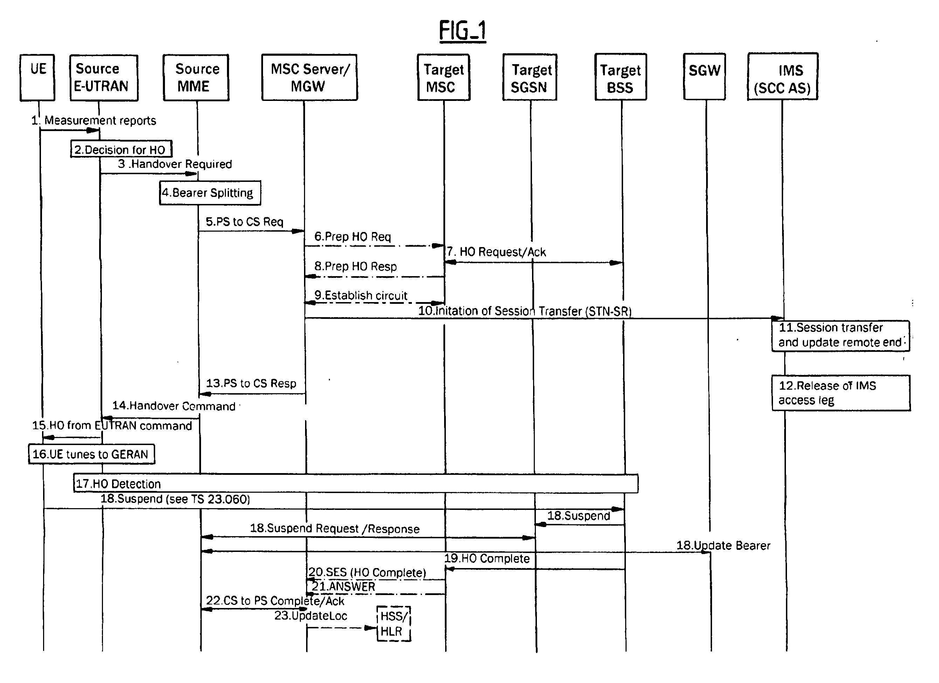

For example, SRVCC from E-UTRAN to GERAN procedure, as specified in 3GPP TS 23.216, is recalled in figure 1.

Document ALCATEL-LUCENT ET AL: "Alternative E enhancements » 3GPP DRAFT; S2-081361_ALT E ENHANCEMENTS, 3RD GENERATION PARTNERSHIP PROJECT (3GPP), vol. SA WG2, 8 February 2008 provides technological background in respect of SRVCC.

Generally, there is a need to improve SRVCC functionality. In particular, there is a need to reduce communication breaks occurring during SRVCC procedure such as for example SRVCC from E-UTRAN to GERAN procedure recalled in figure 1, as will be described with more detail later in the description. Such communication breaks are very badly perceived by end users; there is a need to improve end user experience or quality of service as perceived by end users.

The present invention in particular addresses such needs.

These and other objects are achieved, in one aspect of the present invention, by a method for the reduction of flow break in Single Radio Voice Call Continuity SRVCC mobility for a User Equipment UE, SRVCC mobility including Hand-Over HO execution procedure and Voice Call Continuity VCC procedure, said method comprising a step of:
- delaying HO execution at the UE, to coordinate HO execution procedure and VCC procedure.

These and other objects are achieved in other aspects of the present invention, by a User Equipment, and by network entities (including entities of Radio Access Network RAN such as E-UTRAN or UTRAN (HSPA) for example, as well as entities of Core Network such as CS Core Network and Evolved Packet Core EPC or PS Core Network for example) comprising means for carrying out such method.

These and other objects of the present invention will become more apparent from the following description taken in conjunction with the accompanying drawings:
- figure 1 is intended to recall SRVCC procedure such as for example SRVCC from E-UTRAN to GERAN procedure, as specified in 3GPP TS 23.216 specification,
- figure 2 is intended to illustrate communication breaks occurring during SRVCC procedure such as for example SRVCC from E-UTRAN to GERAN procedure,
- figure 3 is intended to illustrate different scenarios for key SRVCC events influencing communication break duration,
- figure 4 is intended to illustrate a possible solution for SRVCC procedure such as for example SRVCC from E-UTRAN to GERAN procedure, having some drawbacks that embodiments of the present invention enable to avoid,
- figure 5 is intended to illustrate SRVCC procedure such as for example SRVCC from E-UTRAN to GERAN procedure, according to an embodiment of the present invention,
- figure 6 is intended to illustrate SRVCC procedure such as for example SRVCC from E-UTRAN to GERAN procedure, according to another embodiment of the present invention,
- figure 7 is intended to illustrate reduction of communication break duration enabled by embodiments of the present invention.

SRVCC from E-UTRAN to GERAN procedure as recalled in figure 1 can be considered as comprising Hand-Over HO preparation procedure (steps 1 to 9), VCC or Session Transfer procedure (steps 10 to 12), and HO execution procedure (steps 13 to 17).

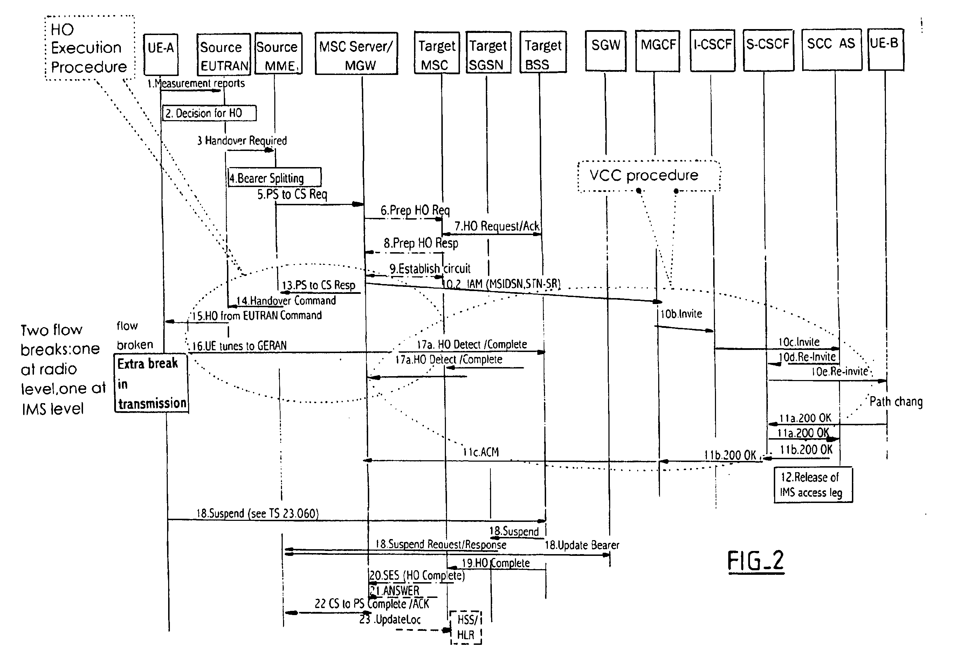

SRVCC procedure such as for example SRVCC from E-UTRAN to GERAN procedure, as illustrated in figure 2, is a more detailed view than figure 1, intended in particular to illustrate HO execution procedure, VCC procedure, and communication breaks occurring during such SRVCC procedure.

Elements illustrated in figure 2 include in particular the following elements:
- UE-A (also referred to hereinafter as UE): SRVCC capable User Equipment UE,
- Source MME: SRVCC capable Mobility Management Entity MME (within Evolved Packet Core EPC),
   MSC Server/MGW: Mobile Switching Center Server/Media Gateway, where MSC Server corresponds to MSC Server enhanced for SRVCC, in particular MSC Server invoking the Session Transfer procedure, and coordinating the HO procedure and the Session Transfer procedure,
- Target MSC: MSC controlling the Target BSS (if the MSC Server controls the Target BSS, the functions of the MSC Server are merged with thoses of the target MSC),
- Target BSS: Target GERAN Base Station Subsystem,
- MGCF: IMS entity corresponding to Media Gateway Control Function,
- I-CSCF: IMS entity corresponding to Interrogating-Call Session Control Function,
- S-CSCF: IMS entity corresponding to Serving-Call Session Control Function,
- SCC AS : IMS entity corresponding to Service Centralization and Continuity, Application Server,
- UE-B: remote terminal.

VCC procedure in the example illustrated in figure 2 includes the following steps:
- 10a: MSC Server sends ISUP Initial Address IAM (MSISDN, STN-SR) message to Media Gateway Control Function MGCF, where STN-SR corresponds to Session Transfer Number for SRVCC, as specified in particular in 3GPP TS 23.237,
- 10b: MGCF sends SIP Invite message to I-CSCF
- 10c: I-CSCF sends SIP Invite message to SCC AS
- 10d: SCC AS sends SIP Re-Invite message to S-CSCF
- 10e: S-CSCF sends SIP Re-invite message to UE-B
- 11a: UE-B sends SIP 200 OK message to SCC AS via S-CSCF
- 11b: SCC AS sends SIP 200 OK message to MGCF via S-CSCF
- 11c: MGCF sends ISUP Address Complete ACM message to MSC Server.

HO execution procedure in the example illustrated in figure 2 includes the following steps:
- 13: MSC Server sends "SRVCC PS to CS Response" message to Source MME, according to the protocol on the Sv interface between MME and MSC Server, as specified in particular in 3GPP TS 29.280,
- 14: Source MME sends "Handover Command" message to Source E-UTRAN, according to the S1AP protocol on the S1 interface between E-UTRAN and MME, as specified in particular in 3GPP TS 36.413,
- 15: Source E-UTRAN sends "HO from E-UTRAN command" message to UE-A, according to the Radio Resource Control RRC protocol on the radio interface between UE and E-UTRAN, as specified in particular in 3GPP TS 36.331,
- 16: UE-A tunes to GERAN
- 17a: UE-A sends "HO Detect/Complete" message to Target BSS according to the RRC protocol on the radio interface between UE and GERAN BSS, as specified in particular in 3GPP TS 44.018, then Target BSS sends "HO Detect/complete" message to Target MSC according to the protocol on the interface between BSS and MSC, as specified in particular in 3GPP TS 48.008, then Target MSC sends "HO Detect/complete" message to MSC Server according to handover procedures as specified in particular in 3GPP TS 23.009.

Generally, a HO command (ordering HO to an UE) to be sent on the radio interface between the UE and the network, is built by the Target RAN and sent to the UE while the UE is still in the Source RAN (the HO command being carried transparently in messages sent to the UE via the Source RAN)

In the example illustrated in figure 2, a HO command as defined in 3GPP TS 44.018 is built by the Target BSS and carried transparently in the following messages:
- "Handover Request ACK" message sent in step 7 by Target BSS to Target MSC according to the protocol on the interface between BSS and MSC, as specified in particular in 3GPP TS 48.008,
- "Prep HO Response" message, sent in step 8 by Target MSC to MSC Server according to handover procedures as specified in particular in 3GPP TS 23.009,
- "SRVCC PS to CS Response" message, sent in step 13 by MSC Server to Source MME as recalled above, the HO command being carried within this message in a Target to Source Transparent Container,
- "Handover Command" message, sent in step 14 by Source MME to Source E-UTRAN as recalled above, the HO command being carried within this message in a Target to Source Transparent Container,
- "HO from EUTRAN command" message, sent in step 15 by Source E-UTRAN to UE, as recalled above the HO command being carried within this message in a Target RAT Message Container.

In the example of figure 2, the following flow breaks occuring during such SRVCC procedure are illustrated:
- a first flow break during step 16 when UE-A tunes to GERAN, , and lasting up to 17a when the UE has been finally detected on the target coverage
- a second flow break between steps 10e and 11a corresponding to path change to/from UE-B, and
- leading an extra flow break as compared to a pure CS domain Hand-Over procedure where only the first flow break is to be experienced, if step 11a happens after step 17a.

Embodiments of the present invention that will be described hereinafter are based in particular on the following ideas.

SRVCC procedure is invoked when a mobile, that is engaged in an IMS/sip call/session with a voice component, has to move from a source radio coverage where Voice over IP is carried over the radio towards a target radio coverage where the voice bearer needs to be carried by the CS domain, i.e. controlled by a MSC (server). SRVCC procedure is standardized for GERAN, UTRAN and 1xRTT CDMA2000 target systems.

During this procedure, the address to which the remote terminal environment sends voice traffic towards the mobile has to be changed from the address used on the source radio into the address used to reach the MSC (server)/MGW that will serve the mobile after the mobility event has taken place.

In order for SRVCC procedure to work in the case where the mobile has got only one radio chain working at a given time ("Single Radio") the responsible network node (the new MSC (server) allocated to the UE) issues the two following parallel procedures after having reserved Radio Access Network resources on the Target Radio Subsystem i.e.
1. Changing the path between the moving mobile and the Core Network: i.e. ordering the mobile to tune its radio to the target cell i.e. to stop camping on the source radio and to start camping on the target radio. The message sent by the source Radio Access Network to the mobile is called a Hand-Over Command in the present application even though the actual message sent to the mobile may depend on the Radio Access Technology (GERAN, UTRAN, E-UTRAN, ...)
2. Changing the path between the remote UE and the Core Network: i.e.
   issuing a VCC procedure (Voice Call Continuity), also called Session Transfer, in which a call to a specific Application Server (AS) sitting on IMS is initiated, in order for this application server (SCC AS) to update the remote terminal environment with the new address to which voice traffic towards the moving mobile should be sent.

Both procedures have impacts on the transmission path used to carry voice traffic between the UE that moves and the remote UE. As soon as one path has been changed, the UE that moves and the remote UE are no more able to exchange voice traffic until the other path has been changed.

The issue is that nothing synchronizes those 2 events occurring at different places of the network
1. The change of radio tuning by the moving mobile is carried out locally and its duration depends on radio conditions and on the load of the target Radio Subsystem;
2. The VCC procedure is carried out remotely and its duration depends on the differences in performance in a multi-vendor environment, on whether the UE is roaming or not (different IMS signalling), and on the load of the IMS network as well as on the load of the remote terminal environment;
   As those events are not synchronized then there is the risk that they happen consecutively (with very likely the radio re-tuning happening first) instead of simultaneously, thus bringing a long service interruption delay.

In current SRVCC R8 procedure, the Session Transfer is initiated by the MSC (server) at the same Time Tₛₜₐᵣₜ than the change of radio is commanded by the MSC (server) towards the UE.

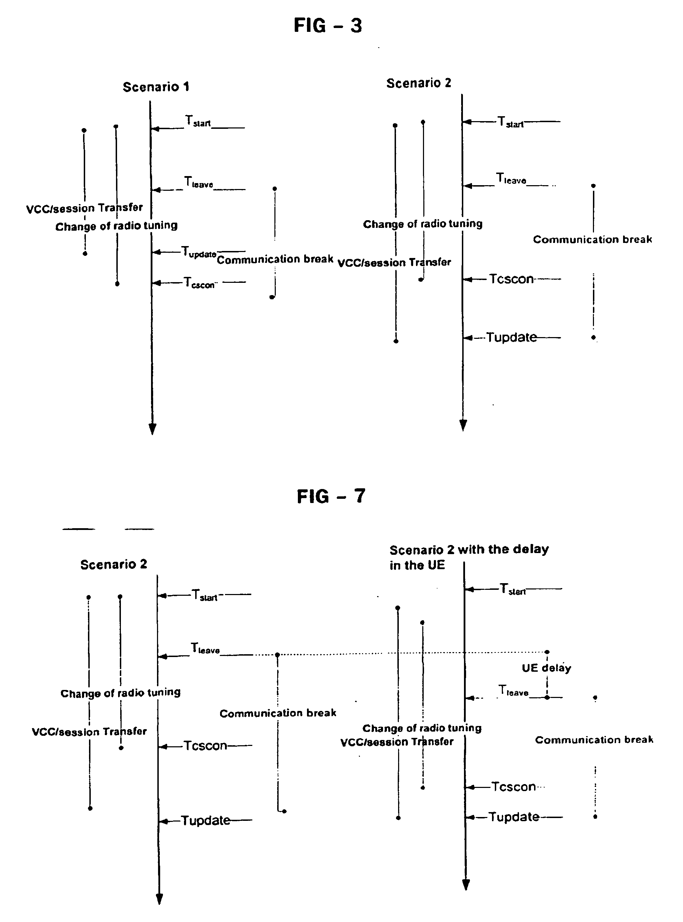

The break in communication depends on when the PS "break" occurs and when the CS "make" occurs, as illustrated in figure 3:
- The UE is no longer able to send PS packets once it has stopped camping over the source RAN. Let's call the time at which this occurs, Tₗₑₐᵥₑ and call the time when the circuit connection is complete in the network T_{cscon}
   ○ Tₗₑₐᵥₑ - Tₛₜₐᵣₜ corresponds to the time taken to send the Handover Command message from the MSC (server) to the UE
   ○ T_{cscon} - Tₗₑₐᵥₑ corresponds to the time taken to actually execute the Hand-over command procedure
- The remote UE is no longer able to receive PS packets from the UE once the SCC AS has updated the remote end (call this time T_{update}).
   This VCC/session Transfer procedure starts at Tₛₜₐᵣₜ
   ○ T_{update} - Tₛₜₐᵣₜ corresponds to the time taken by the VCC / Session Transfer procedure
- The CS media is not available to both parties until two conditions are satisfied:
   ○ the circuit connection is complete in the network (T_{cscon})
   ○ the SCC AS has updated the remote end (T_{update}).

Thus following scenarios are possible for what events determine the break in communication between the UE's:
1. T_{update} is less than T_{cscon} (the interruption time is T_{cscon} - Tₗₑₐᵥₑ)
2. T_{update} is greater than T_{cscon} (the interruption time is T_{update} - Tₗₑₐᵥₑ)

For scenario 1 the existing procedures seem sufficient to minimize the communication break and the service interruption time corresponds roughly to the one experienced today in case of a native CS domain inter-BSS/UTRAN mobility.

Thus, it is worth optimizing the procedures (or minimizing the break) in scenario 2 as this is the most likely case.

A possible approach might be as follows.

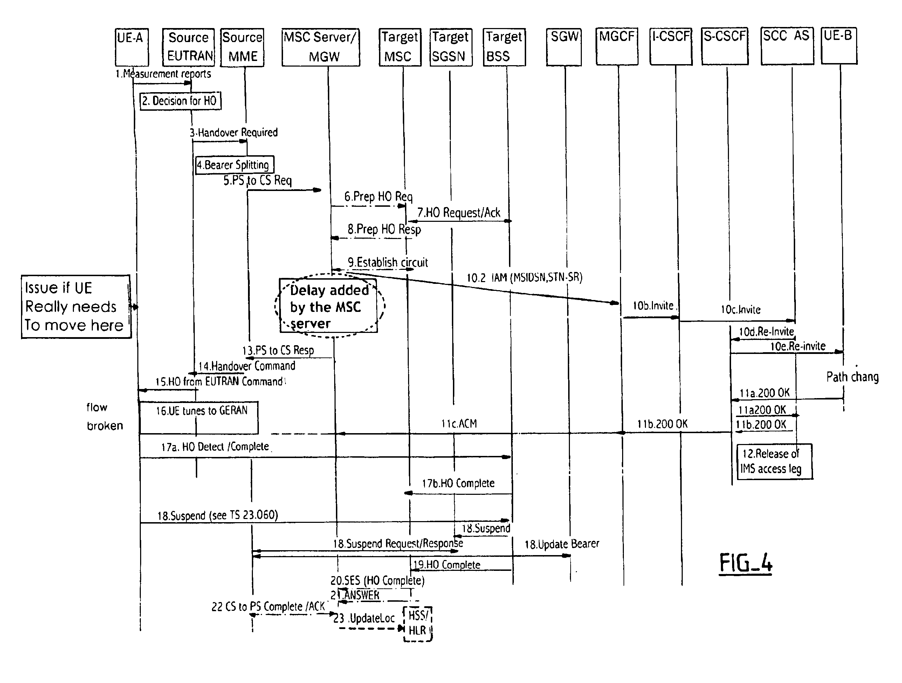

As illustrated in figure 4, the MSC (server) might have an implementation that delays the sending to the UE of the Hand-Over command (to change of coverage camping) with regard to the start of the VCC procedure to compensate the delay of Session Transfer execution.

One of the reasons why this does not work properly is that sometimes sending the Hand-Over command cannot be delayed due to radio conditions dwindling too rapidly. Delaying the sending of the Hand-Over command would in those cases mean losing the UE, as in those cases, the UE may be no more reachable over the source radio when the Hand-Over command is actually sent.

Embodiments of the present invention described hereinafter in particular enable to avoid drawbacks of such possible approach.

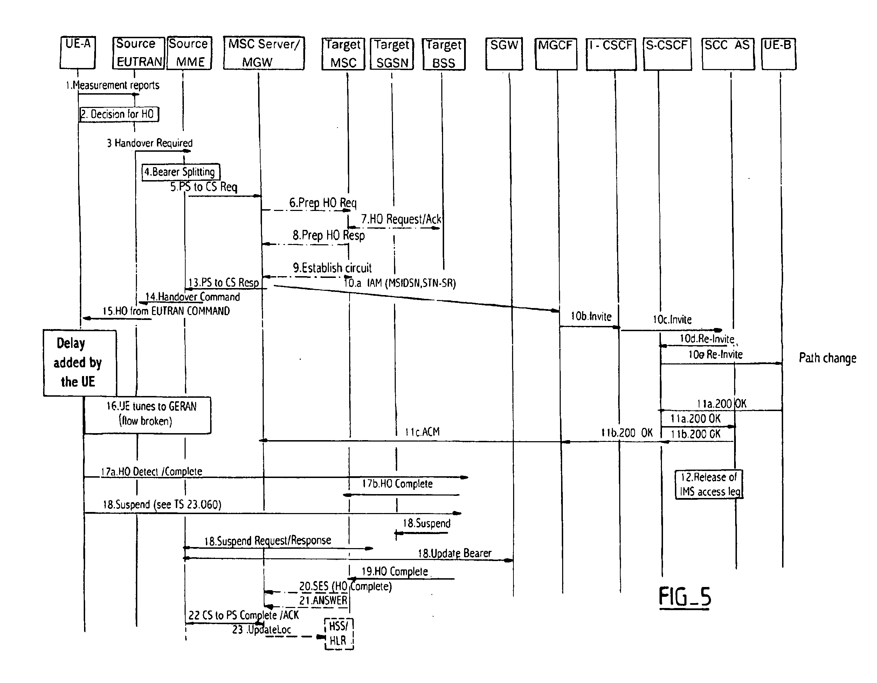

In an embodiment, illustrated in figure 5 for the example of SRVCC from E-UTRAN to GERMAN, the present invention provides introducing a delay after the HO command is received by the UE.

The UE itself may delay tuning to the new RAN, even though it has received the HO command. This solution allows:
- To make sure that the UE can receive the HO command as soon as possible even though its radio conditions are dwindling rapidly
- That the UE may decide afterwards to over-ride any delay (to change of camping cell) if its radio conditions go below an "un-acceptable threshold"

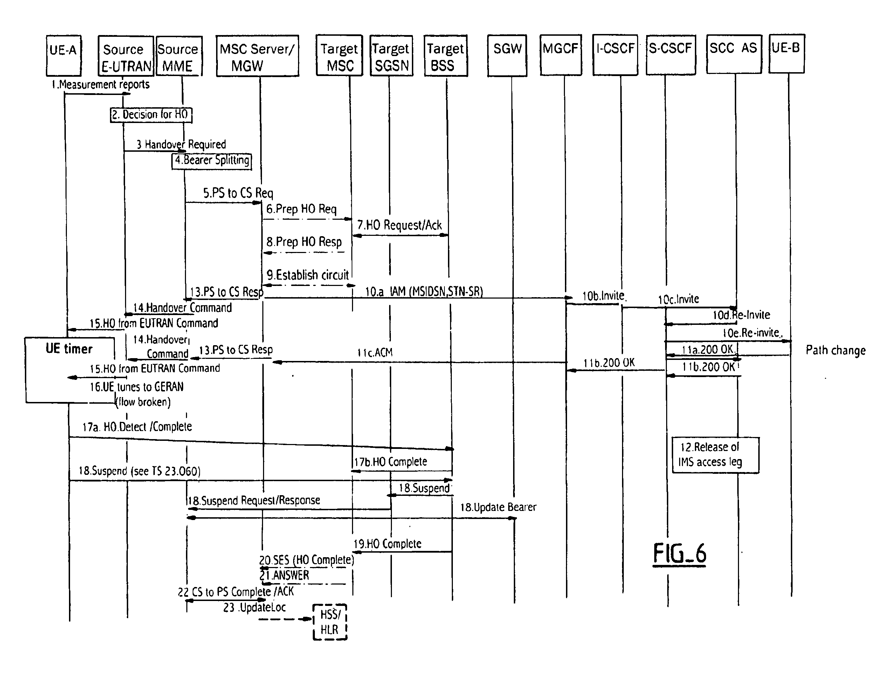

The UE may decide when to tune according to following algorithms:
- One approach would be for the UE to wait until it stops receiving packets. This would indicate that the packet communication path has been broken (i.e. that the remote party environment has already been updated by the VCC/Session Transfer procedure). The issue is that this approach would mean tuning to the new RAN too late, i.e. after the VCC procedure, meaning an increased service interruption time
- A better possibility is that a delay parameter is added to the Hand- Over command message sent over the source radio to the UE during the SRVCC procedure. For example, an UE receiving a HO command with this delay parameter, sets a timer with the value received within the Hand-Over command and then wait to actually carry out the change of cell camping for the first of following events to happen
   o The timer expires
   o The radio quality over the source radio is already or goes below an "un-acceptable threshold" and makes the HO urgent
   A further optimization of this variant, illustrated in figure 6 for the example of SRVCC from E-UTRAN to GERAN, would be that when it is notified that the path between its MGW and the remote UE environment has been established, the MSC (server) sends another Hand-Over Command message with delay = zero (or no delay parameter) in order to command an immediate Hand-Over. This optimization allows preventing that a too long delay set by the MSC (server) in the first Hand-Over command would make the UE start changing of radio camping too late, thus increasing the flow break instead of reducing it,

The message corresponding to this notification of path establishment depends on the actual network call control signalling protocol used by the MSC (server) for the call associated with the VCC procedure (it may be an ISUP, a BICC or SIP appropriate message (ACM, ANM, 200 OK...)).

Thus, as can be seen from figure 7, if Tₗₑₐᵥₑ is delayed, T_{cscon} is also delayed by approximate the same amount. As long as T_{update} is longer than 400ms plus the delay then the communication break will be reduced, but if the delay pushes Tcscon beyond Tupdate it will have the effect of actually increasing the communication break.

In an embodiment, the present invention provides that the Hand-Over Command is sent to the UE as soon as possible i.e. in parallel with the launch of the VCC procedure. But this Hand-Over command contains a new parameter - a delay whereby the mobile is assumed to wait for the completion of the delay before actually carrying out the change of radio camping, unless local radio conditions at the mobile make it mandatory to carry out the Hand-Over at once to avoid a call drop.

Various embodiments of the present invention are considered in the following:
1) During the SRVCC procedure, a delay parameter is added to the Hand-Over command message sent over the source radio to the UE, and the HO excution procedure is delayed accordingly by the UE, as illustrated in figure 5.
   A UE conforming to an embodiment of the present invention, sets a timer with the value received from the Hand-Over command and then waits to actually carry out the change of cell camping for the first of following events to happen
   - The timer expires
   - The radio quality over the source radio goes below an "un-acceptable threshold".
2) As an improvement of this procedure, it is the MSC (server) that determines this delay parameter added to the Hand-Over command message and passes its value to the source Radio Access Network along with the request of starting the Hand-Over execution phase. This makes it possible to have the value of this delay depending on global network conditions such as whether the mobile is roaming from a far country, from a neighbour country or not roaming.

The delay value may also be adapted to the Radio Access Technology (3G, LTE,...) of the source radio (i.e. of the radio on which the Hand-Over command is to be sent).
3) Another associated improvement of the synchronization can be performed by the following mechanism: the MSC (server) sends the Hand-Over command with the delay as soon as possible i.e. in parallel with the launch of the VCC procedure as described above, as illustrated at step 13 in figure - (the HO command then being sent by the Source MME to the Source E-UTRAN at step 14, and by the Source E-UTRAN to the UE at step 15). Later on when it is notified that the path between its MGW and the remote UE environment has been established, the MSC (server) sends another Hand-Over Command message with delay = zero (or no delay parameter), as also illustrated at step 13 in figure 6 (the HO command then being sent by the Source MME to the Source E-UTRAN at step 14, and by the Source E-UTRAN to the UE at step 15b).
   A UE conforming to an embodiment of the present invention, sets a timer with the value received from the Hand-Over command and then waits to actually carry out the change of cell camping for the first of following events to happen
   - The timer expires
   - The radio quality over the source radio goes below an "un-acceptable threshold".
   - The reception by the mobile of a new Hand-Over Command message ordering an immediate handover (Hand-Over command with a delay value equal to 0 or no delay value).

This mechanism allows preventing that a too long delay set by the MSC (server) in the first Hand-Over command would make the UE start changing of radio camping too late, thus increasing the flow break instead of reducing it

The message corresponding to this notification of path establishment depends on the actual network call control signalling protocol used by the MSC (server) for the call associated with the VCC procedure (it may be an ISUP, a BICC or SIP appropriate message (ACM, ANM, SIP 200 OK...)).
4) Same principles apply for SRVCC from E-UTRAN and 1xRTT where the 1xCS IWS plays the role of the Serving MSC as described in TS 23.216.
5) When the source Radio Access Network is an Evolved UTRAN (E-UTRAN), the Radio Access Network is an Evolved Node B (ENB) and is controlled via a Mobility management Entity (MME) defined in 3GPP TS 23.401. When the source Radio Access Network is an UTRAN, the Radio Access Network is made up of a RNC and a Node B and is controlled by a SGSN. All these functional entities are further defined in 3GPP TS 23.002. Other source Radio Access Networks may also support embodiments of the invention.
6) In case of Hand-Over from E-UTRAN to legacy 3gpp coverage (GSM, UTRAN), the message flow from the MSC (server) towards the UE via the radio takes the form of
   - A "SRVCC PS to CS Response" message over the Sv reference point from the MSC (server) to the MME. The Sv interface between the Mobility Management Entity (MME) or Serving GPRS Support Node (SGSN) and 3GPP MSC (server) enhanced for SRVCC is defined in 3gpp TS 29.280.
   - A "Hand-Over command" message over the S1-AP reference point between the MME and the ENB. This message is defined in 3gpp TS 36.413
   - A "Hand-Over From E-UTRAN command" message over the air interface between the ENB and the mobile (or UE).

In an embodiment, the delay parameter is added to each of those messages.
7) A mobile not conforming to embodiments of the present invention does not take into account the delay parameter added to the Hand-Over command message received over radio and acts per 3GPP TS 23.216 Rel-8.
   In order to avoid a mobile not conforming to embodiments of the present invention to experience a too long flow break, a specific delay can be added in the source Radio Access Network for these mobiles. To achieve this differentiation between a mobile that conforms to embodiments of the present invention from a mobile that does not, the mobile that conforms to embodiments of the present invention can also notify its capability to the network together, for examplevia a new parameter in the existing "UE Radio Capabilities" defined in e.g. 3GPP TS 25.306 for UTRAN and TS 36.306 for E-UTRAN.

In one aspect, in an embodiment, the present invention provides a method for the reduction of flow break in Single Radio Voice Call Continuity SRVCC mobility for a User Equipment UE, SRVCC mobility including Hand-Over HO execution procedure and Voice Call Continuity VCC procedure, said method comprising a step of:
- delaying HO execution at the UE, to coordinate HO execution procedure and VCC procedure.

In an embodiment, said method comprises a step of:
- delaying HO execution at the UE after reception by the UE of a HO command.

In an embodiment, said method comprises a step of:
- a network entity in charge of said coordination triggering the sending of a HO command in parallel with the launch of the VCC procedure.

In an embodiment, said method comprises a step of:
- the UE performing HO execution as soon as radio conditions make it necessary to avoid call drop.

In an embodiment, said method comprises a step of:
- the UE delaying HO execution according to delay information signaled by the network.

In an embodiment, said method comprises a step of:
- at least one network entity in charge of signaling, sending at least one message including delay information for the UE.

In an embodiment, said method comprises a step of:
- a network entity in charge of signaling, adding said delay information to a message sent by said network entity.

In an embodiment, said method comprises a step of:
- a network entity in charge of signaling, receiving a message including delay information, relaying said delay information in a message sent by said network entity.

In an embodiment, at least one message including signaled delay information, corresponds to a message carrying a HO command.

In an embodiment, signaling delay information includes signaling a delay parameter, followed if necessary by signaling a command ordering immediate HO execution.

In an embodiment, signaling a command ordering immediate HO execution includes signaling a delay parameter with a value zero.

In an embodiment, said method comprises a step of:
- a network entity in charge of said coordination triggering the signaling of delay information to the UE.

In an embodiment, said method comprises a step of:
- a network entity in charge of said coordination triggering the signalling of a delay parameter with a HO command.

In an embodiment, said method comprises a step of:
- a network entity in charge of said coordination triggering the signaling of a command ordering immediate HO execution as a path to/from a remote end has been updated.

In an embodiment, said method comprises a step of:
- a network entity in charge of said coordination determining the value of a signaled delay parameter.

In an embodiment, said method comprises a step of:
- a network entity in charge of said coordination determining the value of a signaled delay parameter, according to network conditions.

In an embodiment, said method comprises a step of:
- upon receiving a delay parameter, the UE setting a timer with the value of said delay parameter and then waiting, to start HO execution, for the first of following events to happen:
   - The timer expires,
   - Radio conditions make it necessary to perform HO execution at once to avoid call drop.

In an embodiment, said method comprises a step of:
- the UE performing HO execution at once if the UE receives a command ordering immediate HO execution.

In an embodiment, said method comprises a step of:
- upon receiving a delay parameter, the UE setting a timer with the value of said delay parameter and then waiting, to start handover execution, for the first of following events to happen:
   - The timer expires,
   - Radio conditions make it necessary to perform HO execution at once to avoid call drop,
   - The reception by the UE of a command ordering immediate HO execution.

In an embodiment, said method comprises a step of:
- a User Equipment UE signalling to the network its capability to take into account delay information for Hand-Over executiuon signalled by the network.

In an embodiment, said method comprises a step of, in the case of SRVCC from a source Radio Access Network RAN corresponding to E-UTRAN fo a target RAN corresponding to GERAN or UTRAN :
- a MSC Server adding a delay parameter to a SRVCC PS to CS Response message carrying a HO command for a UE, sent over Sv reference point from MSC server to MME.

In an embodiment, said method comprises a step of, in the case of SRVCC from a source Radio Access Network RAN corresponding to E-UTRAN to a target RAN corresponding to GERAN or UTRAN:
- a Mobility Management Entity MME receiving a message carrying a HO command for a UE with a delay parameter, relaying said delay parameter in a Hand-Over command message carrying said HO command, sent over S1 -AP reference point from MME to ENB.

In an embodiment, said method comprises a step of, in the case of SRVCC from a source Radio Access Network RAN corresponding to E-UTRAN to a target RAN corresponding to GERAN or UTRAN:
- an Evolved Node B ENB receiving a message carrying a HO command for a UE with a delay parameter, relaying said delay parameter in a Hand-Over From E-UTRAN command message carrying said HO command, sent over the air interface between the ENB and the User Equipment UE.

In an embodiment, said method comprises a step of, in the case of SRVCC from a source Radio Access Network RAN corresponding to an UTRAN to a target RAN corresponding to GERAN or UTRAN :
- a MSC Server adding a delay parameter to a SRVCC PS to CS Response message carrying a HO command for a UE, sent over Sv reference point from MSC server to SGSN.

In an embodiment, said method comprises a step of, in the case of SRVCC from a source Radio Access Network RAN corresponding to an UTRAN to a target RAN corresponding to GERAN or UTRAN:
- a Serving GPRS Support Node SGSN receiving a message carrying a HO command for a UE with a delay parameter, relaying said delay parameter in a SRNS relocation command message carrying said HO command sent over lu-PS reference point from SGSN to UTRAN.

In an embodiment, said method comprises a step of, in the case of SRVCC from a source Radio Access Network RAN corresponding to an UTRAN to a target RAN corresponding to GERAN or UTRAN:
- an Node B receiving a message carrying a HO command for a UE with a delay parameter, relaying said delay parameter in a Hand-Over From UTRAN command message carrying said HO command, sent over the air interface between the Node B and the User Equipment UE.

In another aspect, the present invention provides a network entity, comprising means for performing such method.

In an embodiment, the present invention provides a network entity comprising, for the reduction of flow break in Single Radio Voice Call Continuity SRVCC mobility for a User Equipment UE, SRVCC mobility including Hand-Over HO execution procedure and Voice Call Continuity VCC procedure:
- means for delaying HO execution at the UE, to coordinate HO execution procedure and VCC procedure.

In an embodiment, said network entity comprises:
- means for delaying HO execution at the UE after reception by the UE of a HO command.

In an embodiment, a network entity in charge of said coordination comprises:
- means for triggering the sending of a HO command in parallel with the launch of the VCC procedure.

In an embodiment, at least one network entity in charge of signaling comprises:
- means for sending at least one message including delay information for the UE.

In an embodiment, a network entity in charge of signaling comprises:
- means for adding said delay information to a message sent by said network entity.

In an embodiment, a network entity in charge of signaling comprises:
- means for, upon receiving a message including delay information, relaying said delay information in a message sent by said network entity.

In an embodiment, at least one message including signaled delay information, corresponds to a message carrying a HO command.

In an embodiment, signaling delay information includes signaling a delay parameter, followed if necessary by signaling a command ordering immediate HO execution.

In an embodiment, signaling a command ordering immediate HO execution includes signaling a delay parameter with a value zero.

In an embodiment, a network entity in charge of said coordination comprises:
- means for triggering the signaling of delay information to the UE.

In an embodiment, a network entity in charge of said coordination comprises:
- means for triggering the signalling of a delay parameter with a HO command.

In an embodiment, network entity in charge of said coordination comprises:
- means for triggering the signaling of a command ordering immediate HO execution as a path to/from a remote end has been updated.

In an embodiment, a network entity in charge of said coordination comprises:
- means for determining the value of a signaled delay parameter.

In an embodiment, a network entity in charge of said coordination comprises:
- means for determining the value of a signaled delay parameter, according to network conditions.

In an embodiment, the present invention provides, in the case of SRVCC from a source Radio Access Network RAN corresponding to E-UTRAN to a target RAN corresponding to GERAN or UTRAN, a MSC Server comprising:
- means for adding a delay parameter to a SRVCC PS to CS Response message carrying a HO command for a UE, sent over Sv reference point from MSC server to MME.

In an embodiment, the present invention provides, in the case of SRVCC from a source Radio Access Network RAN corresponding to E-UTRAN to a target RAN corresponding to GERAN or UTRAN, a Mobility Management Entity MME comprising:
- means for, upon receiving a message carrying a HO command for a UE with a delay parameter, relaying said delay parameter in a Hand-Over command message carrying said HO command, sent over S1-AP reference point from MME to ENB.

In an embodiment, the present invention provides, in the case of SRVCC from a source Radio Access Network RAN corresponding to E-UTRAN to a target RAN corresponding to GERAN or UTRAN, an Evolved Node B ENB comprising:
- means for, upon receiving a message carrying a HO command for a UE with a delay parameter, relaying said delay parameter in a Hand-Over From E-UTRAN command message carrying said HO command, sent over the air interface between the ENB and the User Equipment UE.

In an embodiment, the present invention provides, in the case of SRVCC from a source Radio Access Network RAN corresponding to an UTRAN to a target RAN corresponding to GERAN or UTRAN, a MSC Server comprising:
- means for adding a delay parameter to a SRVCC PS to CS Response message carrying a HO command for a UE, sent over Sv reference point from MSC server to SGSN.

In an embodiment, the present invention provides, in the case of SRVCC from a source Radio Access Network RAN corresponding to an UTRAN to a target RAN corresponding to GERAN or UTRAN, a Serving GPRS Support Node SGSN comprising:
- means for, upon receiving a message carrying a HO command for a UE with a delay parameter, relaying said delay parameter in a SRNS relocation command message carrying said HO command sent over lu-PS reference point from SGSN to UTRAN.

In an embodiment, the present invention provides, in the case of SRVCC from a source Radio Access Network RAN corresponding to an UTRAN to a target RAN corresponding to GERAN or UTRAN, an Node B comprising:
- means for, upon receiving a message carrying a HO command for a UE with a delay parameter, relaying said delay parameter in a Hand-Over From UTRAN command message carrying said HO command, sent over the air interface between the Node B and the User Equipment UE.

In another aspect, the present invention provides a User Equipment, comprising means for performing such method.

In an embodiment, the present invention provides, a User Equipment UE comprising, for the reduction of flow break in Single Radio Voice Call Continuity SRVCC mobility for a User Equipment UE, SRVCC mobility including Hand-Over HO execution procedure and Voice Call Continuity VCC procedure:
- means for delaying HO execution at the UE, to coordinate HO execution procedure and VCC procedure.

In an embodiment, said User Equipement UE comprises:
- means for delaying HO execution at the UE after reception by the UE of a HO command.

In an embodiment, said User Equipement UE comprises:
- means for performing HO execution as soon as radio conditions make it necessary to avoid call drop.

In an embodiment, said User Equipement UE comprises:
- means for delaying HO execution according to delay information signaled by the network.

In an embodiment, at least one message including signaled delay information, corresponds to a message carrying a HO command.

In an embodiment, signaling delay information includes signaling a delay parameter, followed if necessary by signaling a command ordering immediate HO execution.

In an embodiment, signaling a command ordering immediate HO execution includes signaling a delay parameter with a value zero.

In an embodiment, said User Equipement UE comprises:
- means for, upon receiving a delay parameter, setting a timer with the value of said delay parameter and then waiting, to start HO execution, for the first of following events to happen:
   - The timer expires,
   - Radio conditions make it necessary to perform HO execution at once to avoid call drop.

In an embodiment, said User Equipement UE comprises:
- means for performing HO execution at once if the UE receives a command ordering immediate HO execution.

In an embodiment, said User Equipement UE comprises:
- means for, upon receiving a delay parameter, setting a timer with the value of said delay parameter and then waiting, to start handover execution, for the first of following events to happen:
   - The timer expires,
   - Radio conditions make it necessary to perform HO execution at once to avoid call drop,
   - The reception by the UE of a command ordering immediate HO execution.

In an embodiment, said User Equipement UE comprises:
- means for signalling to the network its capability to take into account delay information for Hand-Over execution signalled by the network.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for the reduction of flow break in Single Radio Voice Call Continuity SRVCC mobility for a User Equipment UE, SRVCC mobility including Hand-Over HO execution procedure and Voice Call Continuity VCC procedure, said method comprising a step of:
- delaying HO execution at the UE, to coordinate HO execution procedure and VCC procedure.

2. A method according to claim 1, comprising a step of:
- delaying HO execution at the UE after reception by the UE of a HO command.

3. A method according to claim 1 or 2, comprising a step of:
- a network entity in charge of said coordination triggering the sending of a HO command in parallel with the launch of the VCC procedure.

4. A method according to any of claims 1 to 3, comprising a step of:
- the UE performing HO execution as soon as radio conditions make it necessary to avoid call drop.

5. A method according to any of claims 1 to 4, comprising a step of:
- the UE delaying HO execution according to delay information signaled by the network.

6. A method according to any of claims 1 to 5, comprising a step of:
- at least one network entity in charge of signaling, sending at least one message including delay information for the UE.

7. A method according to any of claims 1 to 6, comprising a step of:
- a network entity in charge of signaling, adding said delay information to a message sent by said network entity.

8. A method according to any of claims 1 to 7, comprising a step of:
- a network entity in charge of signaling, receiving a message including delay information, relaying said delay information in a message sent by said network entity.

9. A method according to any of claims 1 to 8, wherein at least one message including signaled delay information, corresponds to a message carrying a HO command.

10. A method according to any of claims 1 to 9, wherein signaling delay information includes signaling o delay parameter, followed if necessary by signaling a command ordering immediate HO execution.

11. A method according to claim 10, wherein signaling a command ordering immediate HO execution includes signaling a delay parameter with a value zero.

12. A method according to any of dams 1 to 11, comprising a step of:
- a network entity in charge of said coordination triggering the signaling of delay information to the UE.

13. A method according to any of claims 1 to 12, comprising a step of;
- a network entity in charge of said coordination triggering the signalling of a delay parameter with a HO command.

14. A method according to any of claims 1 to 13 , comprising a step of:
- a network entity in charge of said coordination triggering the signaling of a command ordering immediate HO execution as a path to/from a remote end has been updated.

15. A method according to any of claim 1 to 14, comprising a step of:
- a network entity in charge of said coordination determining the value of a signaled delay parameter.

16. A method according to any of claim 1 to 15, comprising a step of:
- a network entity in charge of said coordination determining the value of a signaled delay parameter, according to network conditions.

17. A method according to any of claims 1 to 16, comprising a step of:
- upon receiving a delay parameter, the UE setting a timer with the value of said delay parameter and then waiting, to start HO execution, for the first of following events to happen:
• The timer expires,
• Radio conditions make it necessary to perform HO execution at once to avoid call drop.

18. A method according to any of claims 1 to 17, comprising a step of:
- the UE performing HO execution at once if the UE receives a command ordering immediate HO execution.

19. A method according to any of claims 1 to 18, comprising a step of:
- upon receiving a delay parameter, the UE setting a timer with the value of said delay parameter and then waiting, to start handover execution, for the first of following events to happen:
• The timer expires,
• Radio conditions make it necessary to perform HO execution at once to avoid call drop,
• The reception by the UE of a command ordering immediate HO execution.

20. A method according to any of claims 1 to 19, comprising a step of:
- a User Equipment UE signalling to the network its capability to take into account delay information for Hand-Over executiuon signalled by the network.

21. A method according to any of claims 1 to 20, comprising a step of, in the case of SRVCC from a source Radio Access Network RAN corresponding to E-UTRAN to a target RAN corresponding to GERAN or UTRAN :
- a MSC Server adding a delay parameter to a SRVCC PS to CS Response message carrying a HO command for a UE, sent over Sv reference point from MSC server to MME.

22. A method according to any of claims 1 to 21, comprising a step of, in the case of SRVCC from a source Radio Access Network RAN corresponding to E-UTRAN to a target RAN corresponding to GERAN or UTRAN:
- a Mobility Management Entity MME receiving a message carrying a HO command for a UE with a delay parameter, relaying said delay parameter in a Hand-Over command message carrying said HO command, sent over S1-AP reference point from MME to ENB.

23. A method according to any of claims 1 to 22, comprising a step of, in the case of SRVCC from a source Radio Access Network RAN corresponding to E-UTRAN to a target RAN corresponding to GERAN or UTRAN:
- an Evolved Node B ENB receiving a message carrying a HO command for a UE with a delay parameter, relaying said delay parameter in a Hand-Over From E-UTRAN command message carrying said HO command, sent over the air interface between the ENB and the User Equipment UE.

24. A method according to any of claims 1 to 23, comprising a step of, in the case of SRVCC from a source Radio Access Network RAN corresponding to an UTRAN to a target RAN corresponding to GERAN or UTRAN :
- a MSC Server adding a delay parameter to a SRVCC PS to CS Response message carrying a HO command for a UE, sent over Sv reference point from MSC server to SGSN.

25. A method according to any of claims 1 to 24, comprising a step of, in the case of SRVCC from a source Radio Access Network RAN corresponding to an UTRAN to a target RAN corresponding to GERAN or UTRAN:
- a Serving GPRS Support Node SGSN receiving a message carrying a HO command for a UE with a delay parameter, relaying said delay parameter in a SRNS relocation command message carrying said HO command sent over lu-PS reference point from SGSN to UTRAN.

26. A method according to any of claims 1 to 25, comprising a step of, in the case of SRVCC from a source Radio Access Network RAN corresponding to an UTRAN to a target RAN corresponding to GERAN or UTRAN:
- an Node B receiving a message carrying a HO command for a UE with a delay parameter, relaying said delay parameter in a Hand-Over From UTRAN command message carrying said HO command, sent over the air interface between the Node B and the User Equipment UE.

27. A network entity, comprising means for performing a method for the reduction of flow break in Single Radio Voice Call Continuity SRVCC mobility according to any of claims 1 to 26.

28. A User Equipment, comprising means for performing a method for the reduction of flow break in Single Radio Voice Call Continuity SRVCC mobility according to any of claims 1 to 26.

## Patentansprüche

1. Verfahren zur Reduzierung der Flussunterbrechung und zur Aufrechterhaltung einer einzelnen Funksprechverbindung, SRVCC, bei der Mobilität für ein Benutzerendgerät UE, wobei die SRVCC-Mobilität eine Handover- bzw. HERZ-Ausführungsprozedur und eine Sprechverbindungsaufrechterhaltungs- bzw. VCC-Prozedur umfasst, wobei das Verfahren den folgenden Schritt umfasst:
- Verzögern der HO-Ausführung an dem UE, um die HO-Ausführungsprozedur und die VCC-Prozedur zu koordinieren.

2. Verfahren nach Anspruch 1, den folgenden Schritt umfassend:
- Verzögern der HO-Ausführung an dem UE nach Empfang eines HO-Befehls an dem UE.

3. Verfahren nach Anspruch 1 oder 2, den folgenden Schritt umfassend:
- Auslösen, durch eine für die besagte Koordinierung zuständige Netzwerk-Entität, des Sendens eines HO-Befehls parallel zum Starten der VCC-Prozedur.

4. Verfahren nach einem beliebigen der Ansprüche 1 bis 3, den folgenden Schritt umfassend:
- Durchführen, durch das UE, der HO-Ausführung, sobald die Funkbedingungen dies erfordern, um einen Verbindungsabbruch zu vermeiden.

5. Verfahren nach einem beliebigen der Ansprüche 1 bis 4, den folgenden Schritt umfassend:
- Verzögern, durch das UE, der HO-Ausführung gemäß der von dem Netzwerk signalisieren Verzögerungsinformation.

6. Verfahren nach einem beliebigen der Ansprüche 1 bis 5, den folgenden Schritt umfassend:
- Senden, durch mindestens eine für das Signalisieren zuständige Netzwerk-Entität, mindestens einer Nachricht, welche die Verzögerungsinformation für das UE enthält.

7. Verfahren nach einem beliebigen der Ansprüche 1 bis 6, den folgenden Schritt umfassend:
- Hinzufügen, durch eine für das Signalisieren zuständige Netzwerk-Entität, der besagten Verzögerungsinformation zu einer von der besagten Netzwerk-Entität gesendeten Nachricht.

8. Verfahren nach einem beliebigen der Ansprüche 1 bis 7, den folgenden Schritt umfassend:
- Empfangen, an einer für das Signalisieren zuständigen Netzwerk-Entität, einer Nachricht, welche die Verzögerungsinformation enthält, und Weiterleiten der besagten Verzögerungsinformation in einer von der besagten Netzwerk-Entität gesendeten Nachricht.

9. Verfahren nach einem beliebigen der Ansprüche 1 bis 8, wobei mindestens eine Nachricht, welche die signalisierte Verzögerungsinformation enthält, einer Nachricht, die einen HO-Befehl transportiert, entspricht.

10. Verfahren nach einem beliebigen der Ansprüche 1 bis 9, wobei das Signalisieren der Verzögerungsinformation das Signalisieren eines Verzögerungsparameters, gegebenenfalls gefolgt von der Signalisierung eines Befehls zur sofortigen HO-Ausführung, umfasst.

11. Verfahren nach Anspruch 10, wobei das Signalisieren eines Befehls zur sofortigen HO-Ausführung das Signalisieren eines Verzögerungsparameters mit einem Wert von Null umfasst.

12. Verfahren nach einem beliebigen der Ansprüche 1 bis 11, den folgenden Schritt umfassend:
- Auslösen, durch eine für die besagte Koordinierung zuständige Netzwerk-Entität, der Signalisierung der Verzögerungsinformation an das UE.

13. Verfahren nach einem beliebigen der Ansprüche 1 bis 12, den folgenden Schritt umfassend:
- Auslösen, durch eine für die besagte Koordinierung zuständige Netzwerk-Entität, der Signalisierung eines Verzögerungsparameters mit einem HO-Befehl.

14. Verfahren nach einem beliebigen der Ansprüche 1 bis 13, den folgenden Schritt umfassend:
- Auslösen, durch eine für die besagte Koordinierung zuständige Netzwerk-Entität, der Signalisierung eines Befehls für die sofortige HO-Ausführung, wenn ein Pfad zu/von einem entfernten Ende aktualisiert worden ist.

15. Verfahren nach einem beliebigen der Ansprüche 1 bis 14, den folgenden Schritt umfassend:
- Bestimmen, durch eine für die besagte Koordinierung zuständige Netzwerk-Entität, des Wertes eines signalisierten Verzögerungsparameters.

16. Verfahren nach einem beliebigen der Ansprüche 1 bis 15, den folgenden Schritt umfassend:
- Bestimmen, durch eine für die besagte Koordinierung zuständige Netzwerk-Entität, des Wertes eines signalisierten Verzögerungsparameters gemäß den Netzwerkbedingungen.

17. Verfahren nach einem beliebigen der Ansprüche 1 bis 16, den folgenden Schritt umfassend:
- Nach Empfang eines Verzögerungsparameters, Einstellen, durch das UE, eines Timers mit dem Wert des besagten Verzögerungsparameters, und anschließend mit Werten, bevor eine HO-Ausführung gestartet wird, bis das erste der folgenden Ereignisse eintritt:
• Der Timer läuft ab,
• Die Funkbedingungen erfordern das sofortige Durchführen der OHO-Ausführung, um zu vermeiden, dass die Verbindung abgebrochen wird.

18. Verfahren nach einem beliebigen der Ansprüche 1 bis 17, den folgenden Schritt umfassend:
- Sofortiges Durchführen, durch das UE, der HO-Ausführung, wenn das UE einen Befehl für die sofortige HO-Ausführung empfängt.

19. Verfahren nach einem beliebigen der Ansprüche 1 bis 18, den folgenden Schritt umfassend:
- Nach Empfang eines Verzögerungsparameters, Einstellen, durch das UE, eines Timers mit dem Wert des besagten Verzögerungsparameters, und anschließend Warten, bevor eine HO-Ausführung gestartet wird, bis das erste der folgenden Ereignisse eintritt:
• Der Timer läuft ab,
• Die Funkbedingungen erfordern das sofortige Durchführen der HO-Ausführung, um zu vermeiden, dass die Verbindung abgebrochen wird,
• Empfang, an dem UE, eines Befehls zu sofortigen HO-Ausführung.

20. Verfahren nach einem beliebigen der Ansprüche 1 bis 19, den folgenden Schritt umfassend:
- Signalisieren an das Netzwerk, durch das Benutzerendgerät UE, seiner Fähigkeit, eine von dem Netzwerk signalisierte Verzögerungsinformation für die Handover-Ausführung zu berücksichtigen.

21. Verfahren nach einem beliebigen der Ansprüche 1 bis 20, im Fall der SRVCC von einem Quell-Funkzugangsnetzwerk RAN, welches dem E-UTRAN entspricht, an ein Ziel-RAN, welches dem GERAN oder UTRAN entspricht, den folgenden Schritt umfassend:
- Hinzufügen, durch einen MSC-Server, eines Verzögerungsparameters, zu einer SRVCC PS-an-CS-Antwort-Nachricht, welches einen HO-Befehl für ein UE, transportiert und über einen Sv-Bezugspunkt von einem MSC-Server an die MME gesendet wird.

22. Verfahren nach einem beliebigen der Ansprüche 1 bis 21, im Fall der SRVCC von einem Quell-Funkzugangsnetzwerk RAN, welches dem E-UTRAN entspricht, an ein Ziel-RAN, welches dem GERAN oder UTRAN entspricht, den folgenden Schritt umfassend:
- An einer Mobilitätsverwaltungsentität MME, Empfangen einer Nachricht, welche einen HO-Befehl für ein UE mit einem Verzögerungsparameter transportiert, und Weiterleiten des besagten Verzögerungsparameters in einer Handover-Befehl-Nachricht, welche den besagten HO-Befehl transportiert und über einen S1-AP-Bezugspunkt von der MME. an den ENB gesendet wird.

23. Verfahren nach einem beliebigen der Ansprüche 1 bis 22, im Fall der SRVCC von einem Quell-Funkzugangsnetzwerk RAN, welches dem E-UTRAN entspricht, an ein Ziel-RAN, welches dem GERAN oder UTRAN entspricht, den folgenden Schritt umfassend:
- An einem Evolved Node B ENB, Empfangen einer Nachricht, welche einen HO-Befehl für ein UE mit einem Verzögerungsparameter transportiert, und Weiterleiten des besagten Verzögerungsparameters in einer Handdover-vonE-UTRAN-Befehlsnachricht, welche den besagten HO-Befehl transportiert und über die Luftschnittstelle zwischen dem ENB und dem Benutzerendgerät UE gesendet wird.

24. Verfahren nach einem beliebigen der Ansprüche 1 bis 23, im Fall der SRVCC von einem Quell-Funkzugangsnetzwerk RAN, welches dem E-UTRAN entspricht, an ein Ziel-RAN, welches dem GERAN oder UTRAN entspricht, den folgenden Schritt umfassend:
- Durch einen MSC-Server, Hinzufügen eines Verzögerungsparameters zu einer SRVCC PS-an-CS-Antwort-Nachricht, welche einen HO-Befehl für ein Benutzerendgerät transportiert und über den Sv-Bezugspunkt vom MSC-Server an den SGSN gesendet wird.

25. Verfahren nach einem beliebigen der Ansprüche 1 bis 24, im Fall der SRVCC von einem Quell-Zugangsnetzwerk RAN, welches dem E-UTRAN entspricht, an ein Ziel-RAN, welches dem GERAN oder UTRAN entspricht, den folgenden Schritt umfassend:
- An einem Serving GPRS Support Node SGSN, Empfangen einer Nachricht, welche einen HO-Befehl für ein UE mit einem Verzögerungsparameter transportiert, und Weiterleiten des besagten Verzögerungsparameters in einer SRNS-Standortwechselbefehl-Nachricht, welche den besagten HO-Befehl transportiert und über den Iu-PS-Bezugspunkt von dem SGSN an das UTRAN gesendet wird.

26. Verfahren nach einem beliebigen der Ansprüche 1 bis 25, im Fall der SRVCC von einem Quell-Funkzugangsnetzwerk ZAUN, welches dem E-UTRAN entspricht, an ein Ziel-RAN, welches dem GERAN oder UTRAN entspricht, den folgenden Schritt umfassend:
- An einem Node B, Empfangen einer Nachricht, welche einen HO-Befehl für ein UE mit einem Verzögerungsparameter transportiert, und Weiterleiten des besagten Verzögerungsparameters in einer Handover-von-UTRAN-Befehl-Nachricht, welche den besagten HO-Befehl transportiert und über die Luftschnittstelle zwischen dem Node B und dem Benutzerendgerät UE gesendet wird.

27. Netzwerkentität, umfassend Mittel zum Durchführen eines Verfahrens zur Reduzierung der Flussunterbrechung und zur Aufrechterhaltung einer einzelnen Funksprechverbindung, SRVCC, bei der Mobilität gemäß einem beliebigen der Ansprüche 1 bis 26.

28. Benutzerendgerät, umfassend Mittel zum Durchführen eines Verfahrens zur Reduzierung der Flussunterbrechung und zur Aufrechterhaltung einer einzelne Funksprechverbindung, SRVCC, bei der Mobilität gemäß einem beliebigen der Ansprüche 1 bis 26.

## Revendications

1. Procédé pour la réduction de rupture de flux dans une mobilité de continuité d'appel vocal radio unique SRVCC pour un équipement utilisateur UE, la mobilité SRVCC comprenant une procédure d'exécution de transfert HO et une procédure de continuité d'appel vocal VCC, ledit procédé comprenant l'étape suivante :
- retarder une exécution de HO au niveau de l'UE, pour coordonner la procédure d'exécution de HO et la procédure VCC.

2. Procédé selon la revendication 1, comprenant l'étape suivante :
- retarder une exécution de HO au niveau de l'UE après la réception par l'UE d'une commande de HO.

3. Procédé selon la revendication 1 ou 2, comprenant l'étape suivante :
- une entité de réseau en charge de ladite coordination déclenche l'envoi d'une commande de HO parallèlement au lancement de la procédure VCC.

4. Procédé selon l'une quelconque des revendications 1 à 3, comprenant l'étape suivante :
- l'UE procède à l'exécution de HO dès que les conditions radio rendent nécessaire d'éviter un abandon d'appel.

5. Procédé selon l'une quelconque des revendications 1 à 4, comprenant l'étape suivante :
- l'UE retarde l'exécution de HO conformément aux informations de retard signalées par le réseau.

6. Procédé selon l'une quelconque des revendications 1 à 5, comprenant l'étape suivante :
- au moins une entité de réseau en charge de la signalisation, envoie au moins un message contenant des informations de retard pour l'UE.

7. Procédé selon l'une quelconque des revendications 1 à 6, comprenant l'étape suivante :
- une entité de réseau en charge de la signalisation, ajoute lesdites informations de retard dans un message envoyé par ladite entité de réseau.

8. Procédé selon l'une quelconque des revendications 1 à 7, comprenant l'étape suivante :
- une entité de réseau en charge de la signalisation, recevant un message contenant des informations de retard, relaye lesdites informations de retard dans un message envoyé par ladite entité de réseau.

9. Procédé selon l'une quelconque des revendications 1 à 8, dans lequel au moins un message contenant des informations de retard signalées, correspond à un message transportant une commande de HO.

10. Procédé selon l'une quelconque des revendications 1 à 9, dans lequel la signalisation d'informations de retard comprend la signalisation d'un paramètre de retard, suivie si nécessaire de la signalisation d'une commande ordonnant une exécution immédiate de HO.

11. Procédé selon la revendication 10, dans lequel la signalisation d'une commande ordonnant une exécution immédiate de HO comprend la signalisation d'un paramètre de retard avec une valeur nulle.

12. Procédé selon l'une quelconque des revendications 1 à 11, comprenant l'étape suivante :
- une entité de réseau en charge de ladite coordination déclenche la signalisation d'informations de retard à l'UE.

13. Procédé selon l'une quelconque des revendications 1 à 12, comprenant l'étape suivante :
- une entité de réseau en charge de ladite coordination déclenche la signalisation d'un paramètre de retard à l'aide d'une commande de HO.

14. Procédé selon l'une quelconque des revendications 1 à 13, comprenant l'étape suivante :
- une entité de réseau en charge de ladite coordination déclenche la signalisation d'une commande ordonnant une exécution immédiate de HO lorsqu'un chemin vers/depuis une extrémité distante a été mis à jour.

15. Procédé selon l'une quelconque des revendications 1 à 14, comprenant l'étape suivante :
- une entité de réseau en charge de ladite coordination détermine la valeur d'un paramètre de retard signalé.

16. Procédé selon l'une quelconque des revendications 1 à 15, comprenant l'étape suivante :
- une entité de réseau en charge de ladite coordination détermine la valeur d'un paramètre de retard signalé, conformément aux conditions du réseau.

17. Procédé selon l'une quelconque des revendications 1 à 16, comprenant l'étape suivante :
- à la réception d'un paramètre de retard, l'UE règle un temporisateur sur la valeur dudit paramètre de retard puis attend, pour lancer l'exécution de HO, que le premier des événements suivants se produise :
• Le temporisateur expire,
• Les conditions radio rendent nécessaire de procéder à l'exécution immédiate de HO pour éviter un abandon des appels.

18. Procédé selon l'une quelconque des revendications 1 à 17, comprenant l'étape suivante :
- l'UE procède à l'exécution immédiate de HO si l'UE reçoit une commande ordonnant l'exécution immédiate de HO.

19. Procédé selon l'une quelconque des revendications 1 à 18, comprenant l'étape suivante :
- à la réception d'un paramètre de retard, l'UE règle un temporisateur sur la valeur dudit paramètre de retard puis attend, pour lancer l'exécution de transfert, que le premier des évènements suivants se produise :
• Le temporisateur expire,
• Les conditions radio rendent nécessaire de procéder à l'exécution immédiate de HO pour éviter un abandon des appels,
• La réception par l'UE d'une commande ordonnant l'exécution immédiate de HO.

20. Procédé selon l'une quelconque des revendications 1 à 19, comprenant l'étape suivante :
- un équipement utilisateur UE signale au réseau sa capacité à prendre en compte des informations de retard pour l'exécution de transfert signalées par le réseau.

21. Procédé selon l'une quelconque des revendications 1 à 20, comprenant une étape, dans le cas d'une SRVCC à partir d'un réseau d'accès radio RAN source correspondant à un E-UTRAN vers un RAN cible correspondant à un GERAN ou un UTRAN:
- un serveur MSC ajoute un paramètre de retard dans un message de réponse SRVCC PS à CS transportant une commande de HO pour un UE, envoyée sur un point de référence Sv à partir du serveur MSC vers la MME.

22. Procédé selon l'une quelconque des revendications 1 à 21, comprenant une étape, dans le cas d'une SRVCC à partir d'un réseau d'accès radio RAN source correspondant à un E-UTRAN vers un RAN cible correspondant à un GERAN ou un UTRAN:
- une entité de gestion de la mobilité MME reçoit un message transportant une commande de HO pour un UE avec un paramètre de retard, relaie ledit paramètre de retard dans un message de commande de transfert transportant ladite commande de HO, envoyée sur un point de référence S1-AP à partir de la MME vers un ENB.

23. Procédé selon l'une quelconque des revendications 1 à 22, comprenant une étape, dans le cas d'une SRVCC à partir d'un réseau d'accès radio RAN source correspondant à un E-UTRAN vers un RAN cible correspondant a un GERAN ou un UTRAN :
- un noeud B évolué ENB reçoit un message transportant une commande de HO pour un UE avec un paramètre de retard, relaie ledit paramètre de retard dans un message de commande Transfert à partir d'un E-UTRAN transportant ladite commande de HO, envoyée sur l'interface air entre l'ENB et l'équipement utilisateur UE.

24. Procédé selon l'une quelconque des revendications 1 à 23, comprenant une étape, dans le cas d'une SRVCC à partir d'un réseau d'accès radio RAN source correspondant à un UTRAN vers un RAN cible correspondant à un GERAN ou un UTRAN:
- un serveur MSC ajoute un paramètre de retard dans un message de réponse SRVCC PS à CS transportant une commande de HO pour un UE, envoyée sur un point de référence Sv à partir du serveur MSC vers un SGSN.

25. Procédé selon l'une quelconque des revendications 1 à 24, comprenant une étape, dans le cas d'une SRVCC à partir d'un réseau d'accès radio RAN source correspondant à un UTRAN vers un RAN cible correspondant à un GERAN ou un UTRAN :
- un noeud de support GPRS de desserte SGSN reçoit un message transportant une commande de HO pour un UE avec un paramètre de retard, relaie ledit paramètre de retard dans un message de commande de relocalisation de SONS transportant ladite commande de HO envoyée sur un point de référence lu-PS à partir d'un SGSN vers un UTRAN.

26. Procédé selon l'une quelconque des revendications 1 à 25, comprenant une étape, dans le cas d'une SRVCC à partir d'un réseau d'accès radio RAN source correspondant à un UTRAN vers un RAN cible correspondant à un GERAN ou un UTRAN:
- un noeud B reçoit un message transportant une commande de HO pour un UE avec un paramètre de retard, relaie ledit paramètre de retard dans un message de commande Transfert à partir d'un UTRAN transportant ladite commande de HO, envoyée sur l'interface air entre le noeud B et l'équipement utilisateur UE.

27. Entité de réseau, comprenant des moyens pour réaliser un procédé pour la réduction de rupture de flux dans une mobilité de continuité d'appel vocal radio unique SRVCC selon l'une quelconque des revendications 1 à 26.

28. Équipement utilisateur, comprenant des moyens pour réaliser un procédé pour la réduction de rupture de flux dans une mobilité de continuité d'appel vocal radio unique SRVCC selon l'une quelconque des revendications 1 à 26.
